# EUROPÄISCHE PATENTSCHRIFT

(11) **EP 1 733 187 B1**
(45) Veröffentlichungstag und Bekanntmachung des Hinweises auf die Patenterteilung: **19.09.2007**
(21) Anmeldenummer: 05701458.1
(22) Anmeldetag: 07.01.2005
(51) Int. Cl.: G01C 21/32

(54) **VORRICHTUNG ZUR BEREITSTELLUNG UND/ODER AUSWERTUNG VON NAVIGATIONSDATEN SOWIE VERFAHREN ZUR FREISCHALTUNG VON NAVIGATIONSDATEN IN EINEM NAVIGATIONSSYSTEM**
DEVICE FOR MAKING AVAILABLE AND/OR EVALUATING NAVIGATION DATA AND METHOD FOR RELEASING NAVIGATION DATA IN A NAVIGATION SYSTEM
DISPOSITIF DE MISE A DISPOSITION ET/OU D'EVALUATION DE DONNEES DE NAVIGATION ET PROCEDE DE COMMUNICATION DE DONNEES DE NAVIGATION DANS UN SYSTEME DE NAVIGATION

(30) Priorität: 26.02.2004 DE 102004009274
(43) Veröffentlichungstag der Anmeldung: 20.12.2006
(73) Patentinhaber: ROBERT BOSCH GMBH, 70442 Stuttgart (DE)
(72) Erfinder: LISTLE, Holger, 31141 Hildesheim (DE)
(86) Internationale Anmeldenummer: PCT/EP2005/050056
(87) Internationale Veröffentlichungsnummer: WO 2005/083359

(56) Entgegenhaltungen:
- EP-A- 1 139 064
- EP-A- 1 209 445
- EP-A- 1 282 055
- US-A- 5 790 664
- PATENT ABSTRACTS OF JAPAN Bd. 2003, Nr. 01, 14. Januar 2003 (2003-01-14) & JP 2002 267459 A (DENSO CORP), 18. September 2002 (2002-09-18)

## Beschreibung

Die Erfindung betrifft eine Vorrichtung zur Bereitstellung und/oder Auswertung von Navigationsdaten, insbesondere in Kraftfahrzeugen mit zumindest einer Bedieneinrichtung, einem Prozessor und einer Ausgabeeinrichtung. Weiterhin betrifft die Erfindung ein Verfahren zur Freischaltung von Navigationsdaten in einem Navigationssystem, das eine solche Vorrichtung aufweist.

Aus dem Stand der Technik sind Navigationssysteme bekannt, die Datenträger mit einem hohen Speicherumfang aufweisen. Diese Navigationssysteme sind mit einer Funktionalität erhältlich, die das sowohl zeitlich als auch gebietsmäßig selektive Freischalten von Navigationsdaten erlaubt Ein Beispiel für ein solches Navigationssystem ist das von der Firma VDO vertriebene "C-IQ"-System.

Nachteilig an solchen Systemen ist die Tatsache, dass bereits bei dem Verkauf des Gerätes eine Registrierung des Gerätes in einem Servicesystem erforderlich ist, um eine entsprechende Lizenz für die Navigationsdaten zu erwerben und die Navigationsdaten nutzen zu können.

Die Dokumente JP-A-2002 267459, EP-A-1 282 055, EP-A-1 139 064 und EP-A-1 209 445 beschreiben Navigationssysteme, die Kontakt zu einer Verwaltungszentrale aufnehmen können, um eine Lizenz für Navigationsdaten zu erteilen (JP-A-2002 267459) oder zu überprüfen (EP-A-1 282 055), um eine Nutzungsberechtigung für Navigationsdaten einzuholen (EP-A-1 139 064) oder um Navigationsdaten freizuschalten (EP-A-1 209 445).

Ausgehend von diesem Stand der Technik liegt der Erfindung die Aufgabe zugrunde, eine Vorrichtung und ein Verfahren bereitzustellen, das eine bequemere und variablere Nutzung der Navigationsdaten erlaubt.

Erfindungsgemäß wird diese Aufgabe durch eine Vorrichtung mit den Merkmalen des Anspruchs 1 sowie durch ein Verfahren mit den Merkmalen des Anspruchs 6 gelöst Die Vorrichtung zur Bereitstellung und/oder Auswertung von Navigationsdaten sieht zumindest eine Bedieneinrichtung, einen Prozessor und eine Ausgabeeinrichtung vor, damit die Navigationsdaten, insbesondere Routen und ergänzende Informationen, abgefragt, verarbeitet und dem Nutzer zugänglich gemacht werden können. In einer solchen Vorrichtung ist eine Initiallizenz hinterlegt, die es dem Nutzer der Vorrichtung bzw. des Navigationssystems ermöglicht, ohne eine Registrierung in einem Servicesystem auf einen Datenumfang zurückzugreifen, der von dem anfänglichen Lizenzumfang abhängt. Der Nutzer des Navigationssystems bzw. der Vorrichtung zur Bereitstellung und Auswertung von Navigationsdaten muss somit nicht mehr eine Anmeldung und Registrierung in einem Servicesystem durchführen, sondern kann sofort das Navigationssystem nutzen.

Eine Weiterbildung der Erfindung sieht vor, dass die Initiallizenz zeitlich befristet ist. In diesem Fall wird bei der Erstnutzung der Beginn der Nutzungsdauer bestätigt oder automatisch ermittelt, so dass unmittelbar nach der Ermittlung oder Bestätigung der Nutzer auf die Navigationsdaten zugreifen kann. Dadurch ist es möglich, dass sogenannte "Schnupper-Lizenzen" in eine Vorrichtung oder ein Navigationssystem integriert werden können, damit der Nutzer das Produkt erleben und bewerten kann, bevor er einen vollständigen Lizenzcode erwirbt und damit eine Volllizenz erhält. Unter einer Initiallizenz wird eine solche Lizenz verstanden, die bereits bei der Herstellung in einem Gerät hinterlegt wird und eine Nutzung von Navigationsdaten von Anfang an ermöglicht. Eine solche Nutzung von Anfang an muss nicht eine vollständige Nutzungsberechtigung sämtlicher Navigationsdaten umfassen, vielmehr stehen einem Nutzer weitere Optionen für alternative oder ergänzende Navigationsdaten oder Systemkomponenten zur Verfügung. Daher ist es vorgesehen, dass die Initiallizenz eine Nutzung der Navigationsdaten in einem eingeschränkten Umfang gestattet, beispielsweise dass die Navigationsdaten auf ein bestimmtes Gebiet beschränkt sind, dass Zusatzinformationen nicht ausgegeben werden, dass eine bestimmte Auflösung nicht überschritten wird oder dass eine zusätzliche, zeitliche Limitierung eingebaut ist, So bietet sich beispielsweise die Möglichkeit, eine Kombination aus einem Gerät und Navigationsdaten-Nutzungsrechten anzubieten, die die Nutzung eines Navigationssystems mit einer entsprechenden Vorrichtung für ein beschränktes Gebiet und für einen festgelegten Zeitraum gestatten.

Es ist vorgesehen, dass die Initiallizenz während des Herstellungsprozesses der Vorrichtung implementiert wird und bereits vor der Implementierung der Vorrichtung in einem Fahrzeug innerhalb der Vorrichtung hinterlegt ist. Zweckmäßigerweise ist die Initiallizenz an die Vorrichtung gebunden, um eine mißbräuchliche Verwendung der Lizenzen zu vermeiden.

Das Verfahren zur Freischaltung von Navigationsdaten in einem oben beschriebenen Navigationssystem bzw. mit einer oben beschriebenen Vorrichtung sieht vor, dass die Initiallizenz als Nutzungsberechtigung bereits bei der Herstellung der Vorrichtung hinterlegt wird. Neben der bereits oben beschriebenen, zeitlich befristeten Lizenz ist es möglich, dass die Initiallizenz unbefristet vergeben wird. In diesem Fall kann die Initiallizenz bei der Integration in die Vorrichtung bzw. in das Navigationsgerät gleich aktiviert werden und fordert keine Interaktion von dem Nutzer, der die Vorrichtung oder das Gerät sofort nach dem Einbau nutzen kann. Dieses Verfahren erlaubt beispielsweise bei Vorrichtungen, die über Automobilhersteller als Fahrzeugausstattung an den Nutzer geliefert werden (OEM-Geräte), den Inhalt eines mitgelieferten Datenträgers unbefristet freizuschalten. Der Käufer eines Fahrzeuges bekommt ohne weitere Interaktion ein vollständig nutzbares System, allerdings ergänzt um die Möglichkeit, alternative und/oder ergänzende Inhalte von Navigationsdaten zusätzlich freizuschalten. Hierzu müsste der Nutzer wie gewohnt Maßnahmen ergreifen, um zusätzliche Inhalte zu erhalten, beispielsweise über ein Telefonat unter Angabe der Gerätenummer eine Erweiterung des Nutzungsumfanges beantragen.

## Patentansprüche

1. Vorrichtung zur Bereitstellung und/oder Auswertung von Navigationsdaten, insbesondere in Kraftfahrzeugen, mit zumindest einer Bedieneinrichtung, einem Prozessor und einer Ausgabeeinrichtung, **dadurch gekennzeichnet, dass** in der Vorrichtung eine Initiallizenz zur Nutzungsberechtigung der Navigationsdaten hinterlegt ist.

2. Vorrichtung nach Anspruch 1, **dadurch gekennzeichnet, dass** die Initiallizenz zeitlich befristet ist.

3. Vorrichtung nach Anspruch 1 oder 2, **dadurch gekennzeichnet, dass** die Initiallizenz eine Nutzung der Navigationsdaten in einem eingeschränkten Umfang gestattet.

4. Vorrichtung nach einem der voranstehenden Ansprüche, **dadurch gekennzeichnet, dass** die Initiallizenz während des Herstellungsprozesses der Vorrichtung implementiert wird und vor der Inbetriebnahme der Vorrichtung als Teil eines Navigationssystems in dieser hinterlegt ist.

5. Vorrichtung nach einem der voranstehenden Ansprüche, **dadurch gekennzeichnet, dass** die Initiallizenz an die Vorrichtung gebunden ist.

6. Verfahren zur Freischaltung von Navigationsdaten in einem Navigationssystem mit einer Vorrichtung nach einem der voranstehenden Ansprüche, insbesondere für die Fahrzeugnavigation, **dadurch gekennzeichnet, dass** eine Initiallizenz als Nutzungsberechtigung für die Navigationsdaten bei der Herstellung der Vorrichtung hinterlegt wird.

## Claims

1. Device for making available and/or evaluating navigation data, in particular in motor vehicles, having at least an operator control device, a processor and an output device, **characterized in that** an initializing licence for use authorization of the navigation data is stored in the device.

2. Device according to Claim 1, **characterized in that** the initializing licence has a time limitation.

3. Device according to Claim 1 or 2, **characterized in that** the initializing licence permits use of the navigation data within a restricted scope.

4. Device according to one of the preceding claims, **characterized in that** the initializing licence is implemented during the manufacturing process of the device and is stored in the device before the device is put into service as part of the navigation system.

5. Device according to one of the preceding claims, **characterized in that** the initializing licence is tied to the device.

6. Method for releasing navigation data in a navigation system having a device according to one of the preceding claims, in particular for vehicle navigation, **characterized in that** an initializing licence is stored as a use authorization for the navigation data when the device is manufactured.

## Revendications

1. Dispositif de mise à disposition et/ou d'exploitation de données de navigation, notamment dans des véhicules automobiles, ayant au moins une installation de service, un processeur et une installation d'émission,
**caractérisé en ce que**
le dispositif contient une licence initiale autorisant l'utilisation des données de navigation.

2. Dispositif selon la revendication 1,
**caractérisé en ce que**
la licence initiale est limitée dans le temps.

3. Dispositif selon les revendications 1 ou 2,
**caractérisé en ce que**
la licence initiale permet l'utilisation illimitée des données de navigation.

4. Dispositif selon l'une des revendications précédentes,
**caractérisé en ce que**
la licence initiale est implémentée pendant le procédé de fabrication du dispositif et elle est enregistrée dans celui-ci comme partie d'un système de navigation avant la mise en route du dispositif.

5. Dispositif selon l'une des revendications précédentes,
**caractérisé en ce que**
la licence initiale est liée au dispositif.

6. Procédé de libération des données de navigation dans un système de navigation comportant un dispositif selon l'une des revendications précédentes, notamment pour la navigation routière,
**caractérisé par**
une licence initiale comme autorisation d'utilisation des données de navigation, enregistrées lors de la fabrication du dispositif.
